# EUROPEAN PATENT APPLICATION

(11) **EP 4 567 289 A1**
(43) Date of publication of application: **11.06.2025**
(21) Application number: 23214707.4
(22) Date of filing: 06.12.2023
(51) Int. Cl.: F16B 37/04, F16B 21/04, F16B 21/08

(54) **FIXATION SYSTEM FOR A TRUSSWORK STRUCTURE**

(71) Applicant: Airbus Operations GmbH, 21129 Hamburg (DE)
(72) Inventor: BENTHIEN, Hermann, 21129 Hamburg (DE); TAUBE, Sören, 21129 Hamburg (DE); OPPERMANN, Lars, 21129 Hamburg (DE)
(74) Representative: LKGLOBAL Lorenz & Kopf Patentanwalt Attorney at Law PartG mbB

(57) **Abstract**

The present disclosure refers to a fixation clip (10) for providing a connection interface (12) in a trusswork structure (14), said fixation clip (10) comprising an elastic material, from which the fixation clip (10) is at least sectionally made; a central bore (16) with a main axis (z) and a diameter (18) being constant or variable along the main axis (z); and at least one guiding notch (20), wherein the guiding notch (20) is, at least in sections, selectably displaceable towards the central bore (16) or away from the central bore (16), under elastic deformation of the fixation clip (10); and wherein the guiding notch (20) is forming a guiding path (22) around the main axis (z) that is constricted towards the main axis (z) or widened from the main axis (z), depending on said displacement of the guiding notch (20); and wherein the diameter (18) of the central bore (16), at least sectionally, is decreased if the guiding path (22) is constricted and increased, if the guiding path (22) is widened.

The present disclosure further refers to a respective fixation system (30) and a trusswork system (38).

## Description

### Technical Field

The present disclosure refers to trusswork structures and constructions made from trusswork structures and additional structures affixed thereto by respective fixation means.

### Technical Background

Trusswork structures are known as a design principle allowing light weight constructions that are highly resistant to external forces in certain directions. Accordingly, such trusswork structures are widely seen in applications such as buildings or aircrafts. Especially in aircrafts or spacecrafts, trusswork structures beneficially reduce the overall mass of the system.

If additional structures are to be connected to a trusswork structure, it is known to attach claw-like clips to the trusswork structure. Such clips are applied at conjunctions, where different bars of the trusswork are forming a knot.

However, such clips introduce external forces in a concentrated manner in a small area of the knot. This is undesirable, because trussworks tend to be sensitive to forces in directions transverse to the bars of the trusswork. Further, such clips are sticking out from the trusswork structure, thus forming disturbing contours.

### Summary

It may therefore be seen as an object of the invention to provide a flexible and safe possibility of affixing additional structures to a trusswork structure. Any fixation means should be compact, of low technical complexity and should allow for easy assembly. Further, any undesirable imposition of forces to the trusswork should be avoided.

To overcome the problems of the prior art and to solve the above objectives, a fixation clip, a fixation system, a trusswork system, a method of assembling a trusswork system and an aircraft are provided, according to the features of the independent claims. Further embodiments are evident from the dependent claims and from the following description.

An aspect of the present disclosure refers to a fixation clip for providing a connection interface in a trusswork structure. Said fixation clip comprises:
- an elastic material, from which the fixation clip is at least sectionally made;
- a central bore with a main axis and a diameter being constant or variable along the main axis; and
- at least one guiding notch,

wherein the guiding notch is, at least in sections, selectably displaceable towards the central bore or away from the central bore, under elastic deformation of the fixation clip; and
wherein the guiding notch is forming a guiding path around the main axis that is constricted towards the main axis or widened from the main axis, depending on said displacement of the guiding notch; and
wherein the diameter of the central bore, at least sectionally, is decreased if the guiding path is constricted and increased, if the guiding path is widened.

The fixation clip can be arranged in a lattice structure of a trusswork and tightened in position by widening the guiding path, for example by introduction of a fixation element to the central bore. Thus, the guiding portion steadily introduces any fixation forces to the bars surrounding the fixation clip leading to a homogenous distribution of the forces. The same applies to forces imposed by any additional structure, if such an additional structure is affixed to the trusswork via the fixation clip. Since the fixation clip is fully integrated in the lattice structure, there are not disturbing contours extending from the trusswork due to the fixation clip. The fixation mechanism, which is based on elastic deformation, beneficially allows for compensation of thermally or abrasively induced changes in the geometry of the lattice structure. This makes the fixation clip of the present disclosure desirable to be used in aircraft or spacecraft applications.

The elastic material may be a thermoplastic material or other elastic material. The fixation clip preferably is a single part, however, could be assembled of different parts, as well. The fixation clip may be master formed, e.g. in an injection molding process or by a generative manufacturing method, such as 3D-printing. Thus, the fixation clip can be manufactured at very low effort. The central bore is suitable to provide a universal connection interface that may be adapted to a variety of requirements so that the fixation clip provides a standardized trusswork interface. The fixation clip fully fills-out a lattice element and thus the fixation clip may also provide a sealing surface for additional structures to be connected to the trusswork. The fixation clip may also be referred to as a fixation spring.

In some embodiments, the guiding path features a polygonal shape, such as a square or triangle. Generally, the guiding path is designed corresponding to the lattice structure of a trusswork.

In some embodiments, the elastic material, the guiding notch and the central bore are adapted to each other so that elastic deformation of the fixation clip allows, compared to a tension-free state of the fixation clip, an increase or decrease of the diameter of the central bore by 5 to 25 %, while the guiding path is constricted or widened by 5 to 25 % referring to the size of an area enclosed by the guiding path. The change of the diameter of the central bore and the change of the guiding path may, but not necessarily have to be based on equal percentages. Each percentage may preferably range from 10 % to 20 %. Even further preferred, each percentage may range from 12 % to 18 % or may be 13 %, 14%, 15%, 16% or 17 %.

In some embodiments, the central bore comprises a connection interface equipped with a thread or bayonet lock. These allow easy and reliable attachment of a fixation element.

In some embodiments, a structure of the fixation clip forming the guiding notch is slit along the main axis in order to increase structural elasticity. A non-slit fixation clip features a very low technical complexity and is obtainable at low effort. A slit fixation clip allows for choosing a harder elastic material due to the increased structural elasticity. This increases the strength of the connection interface provided by the central bore.

Another aspect of the present disclosure refers to a fixation system for providing a connection interface in a trusswork structure, comprising:
- a fixation clip according to the present disclosure; and
- a fixation element;

wherein the fixation element is insertable to the central bore of the fixation clip, thus increasing the diameter of the central bore under elastic deformation of the fixation clip and widening the guiding path formed by the guiding notch; and
wherein the fixation element is designed to provide the connection interface in combination with the central bore of the fixation clip.

In some embodiments, said fixation element comprises a bolt-like element. In some embodiments, said fixation element comprises a sleeve.

Another aspect of the present disclosure refers to a trusswork system, comprising:
- a trusswork structure comprising at least one lattice structure; and
- at least one fixation system according to the present disclosure;

wherein the guiding path of the fixation clip of the fixation system is designed complementary to the lattice structure;
wherein the lattice structure is arrangeable at least partially in the guiding path; and
wherein the fixation element of the fixation system is insertable to the central bore of the fixation clip, thus increasing the diameter of the central bore under elastic deformation of the fixation clip, widening the guiding path formed by the guiding notch and affixing the fixation system in the lattice structure.

In some embodiments, at least one additional structure is attached to the trusswork structure via the at least one fixation system, wherein the central bore of the fixation clip in combination with the fixation element provide the connection interface in the trusswork structure.

Another aspect of the present disclosure refers to a method of assembling a trusswork system according to the present disclosure, comprising the following steps:
- Arranging the lattice structure of the trusswork structure at least partially in the guiding path of the fixation clip of the fixation system;
- Inserting the fixation element to the central bore of the fixation clip of the fixation system, thus increasing the diameter of the central bore under elastic deformation of the fixation clip, widening the guiding path formed by the guiding notch and affixing the fixation system in the lattice structure;
- Attaching at least one additional structure to the trusswork structure using the central bore of the fixation clip in combination with the fixation element as the connection interface.

Another aspect of the present disclosure refers to an aircraft, comprising a trusswork system according to the present disclosure.

### Brief description of the drawings

The present invention will hereinafter be described in conjunction with the following figures, wherein like numerals denote like elements, and wherein:
- Fig. 1: shows a fixation clip in principle;
- Fig. 2: shows a fixation system in principle;
- Fig. 3: shows a trusswork system in principle;
- Fig. 4: shows an embodiment of a fixation clip in a trusswork system;
- Fig. 5: shows another embodiment of a fixation system in a trusswork system;
- Fig. 6: shows another embodiment of a fixation system in a trusswork system;
- Fig. 7: shows another embodiment of a fixation system similar to that of Fig. 2 in a trusswork system; and
- Fig. 8: shows another embodiment of a fixation system in a trusswork system.

### Detailed description of exemplary embodiments

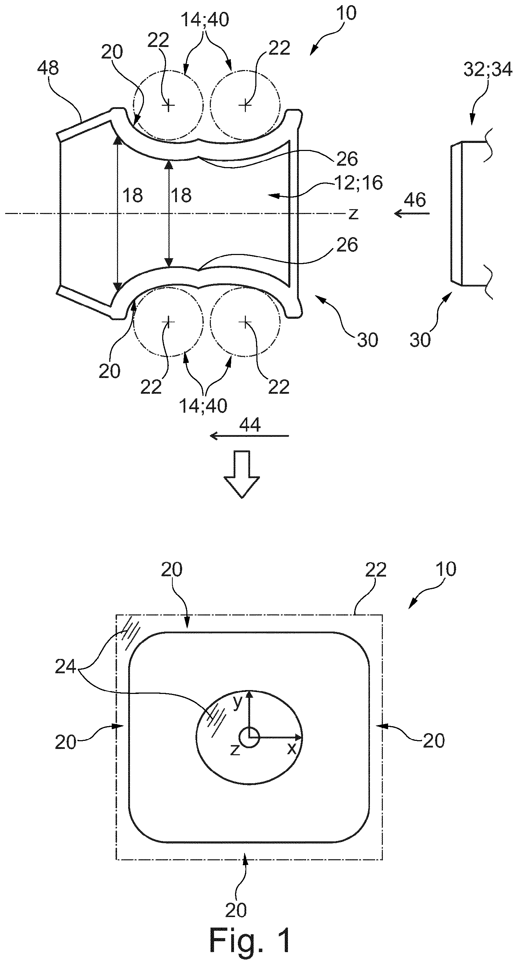

Fig. 1 shows a fixation clip 10 in principle. The fixation clip 10 is designed for providing a connection interface 12 in a trusswork structure 14. In Fig. 1, the trusswork structure 14 is indicated for better illustration by a dash-dotted line representing a cross-section of bars forming a lattice structure 40 of the trusswork structure 14.

The fixation clip 10 comprises an elastic material, from which the fixation clip 10 is entirely or at least sectionally made. The fixation clip 10 comprises a central bore 16 with a main axis z and a diameter 18. The diameter 18 may be constant (in other words the central bore 16 may be cylindrical) or variable along the main axis z, the latter being illustrated Fig. 1. Further, the fixation clip 10 comprises at least one guiding notch 20.

Merely by means of example, the illustrated guiding notch 20 forms two cavities, wherein the illustrated trusswork structure 14 can be arranged. However, it could only be one cavity or even more cavities in other examples. The guiding notch 20 is forming a guiding path 22 around the main axis z to guide the trusswork structure 14. This will be better understood by comparing the upper part of Fig. 1 and the lower part of Fig. 1. The upper part of Fig. 1 shows the fixation clip 10 in a cross-section transverse the main axis z. The lower part of Fig. 1 shows the fixation clip 10 in viewing direction 44 in a non-cut view. The cross-section in the upper part of Fig. 1 corresponds to a cut along a dimension y in the lower part of Fig. 1. In this example, for better illustration of the functional principle of the fixation clip 10, the guiding path 22 is illustrated by a center line of the bars forming the lattice structure 40 of the trusswork structure 14. However, not considering the trusswork structure 14, a different reference could be chosen, such as the ground of the cavities or, the guiding notch 20, respectively. The aforementioned implies there may be one or more such guiding paths 22 arranged sequentially along the main axis z. It is also possible to form a plurality of separate guiding notches running parallel to each other to achieve this.

The guiding notch 20 is, at least in sections, selectably displaceable towards the central bore 16 or away from the central bore 16, under elastic deformation of the fixation clip 10. Since, at the same time, the guiding notch 20 is forming the guiding path 22 around the main axis z, the guiding path 22 is constricted towards the main axis z or widened from the main axis z, depending on said displacement of the guiding notch 20.

At the same time, the diameter 18 of the central bore 16, at least sectionally, is decreased if the guiding path 22 is constricted and increased, if the guiding path 22 is widened.

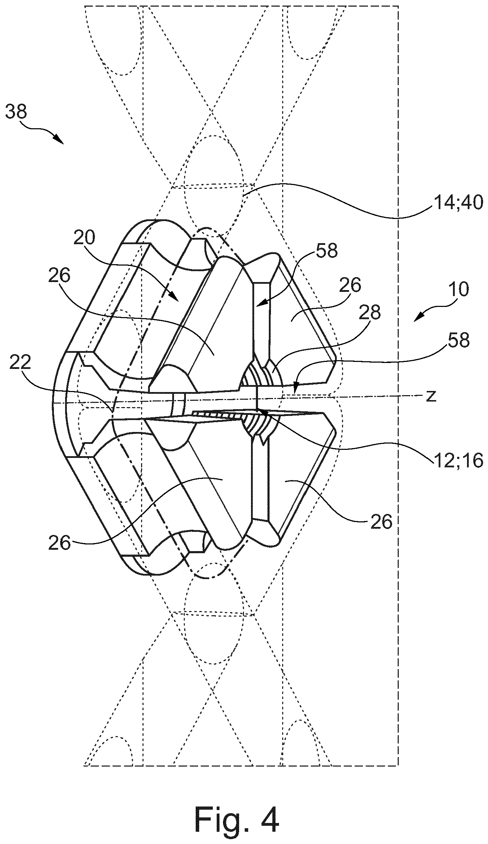

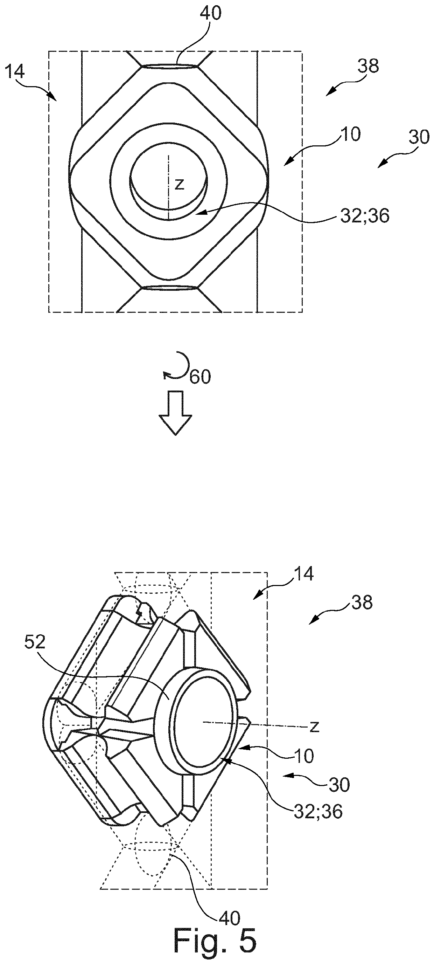

This way, the guiding path 22 can be constricted towards the main axis z to arrange the fixation clip 10 in the trusswork structure 14, which means to guide the bars forming the lattice structure 40 of the trusswork structure 14 into the guiding notch 22 so that they are arranged in the guiding path 22. Then, the guiding path 22 can be widened from the main axis z, thereby tightening the trusswork structure 14 in the guiding notch 22 for safe fixation of the fixation clip 10. The guiding notch 20 may be formed by a continuous or interrupted structure 26 (compare Figs. 4 and 5) of the fixation clip 10 that is elastically deformable.

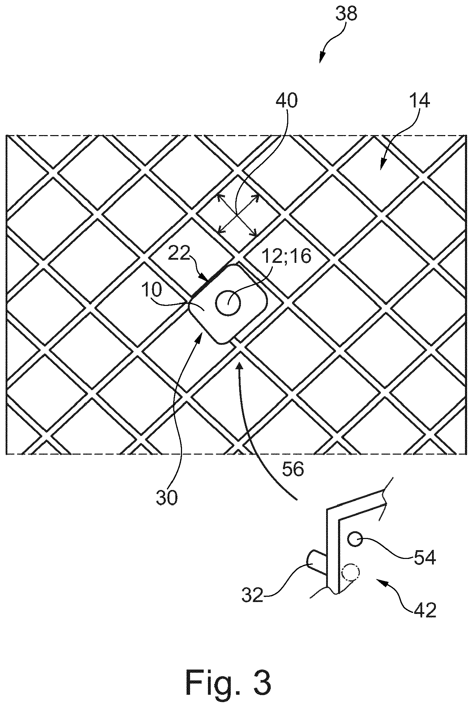

The central bore 16, alone or together with a fixation element 32, provides the desired connection interface 12 to the trusswork structure 14 (compare Fig. 3). The central bore 16 may therefore be equipped with a thread 28 (compare Fig. 4) or with bayonet lock or any other suitable mechanism. At the same time, the central bore 16 is useable to secure the fixation clip 10 in the trusswork structure 14 via the guiding notch 20. This may be done by insertion 46 of a fixation element 32 into the central bore 16 to spread it and thus widen the guiding path 22 from the main axis z.

The central bore 16 may be a clearance hole or a blind hole. It may be cylindrical or may feature a variable diameter 18, for example in case of a conical bore or a bore like a double conus (as known from a rope drum, for example). A variable diameter 18 facilitates spreading the central bore 16 by insertion of the fixation element 32, such as a bolt or screw, which are bolt-like elements 34. Generally, such a fixation element 32 preferably features a shape complementary to that of the central bore 16, e.g. a cylindrical or conical shape. The central bore 16 preferably is, but not necessarily has to be rotationally symmetric. The fixation clip 10 may be equipped with a chamfer 48 to facilitate placing it in the trusswork structure 14.

Preferably, the guiding path 22 features a polygonal shape, as illustrated in the lower part of Fig. 1, wherein a shape similar to a square is shown by means of example. However, it may be adapted to various types of trusswork structures 14. The central bore 16 could also feature a cross-section corresponding to the shape of the guiding path 22 (e.g. polygonal). Corresponding fixation elements 32, e.g. cuboid-like elements, are also possible.

The elastic material, the guiding notch 20 and the central bore 16 are preferably adapted to each other so that elastic deformation of the fixation clip 10 allows, compared to a tension-free state of the fixation clip 10, an increase or decrease of the diameter 18 of the central bore 16 by 5 % to 25 %, while the guiding path 22 is constricted or widened by 5 % to 25 % referring to the size of an area 24 enclosed by the guiding path 22. Experiments of the applicant have demonstrated that the above ratios assure safe fixation and easy assembly at the same time.

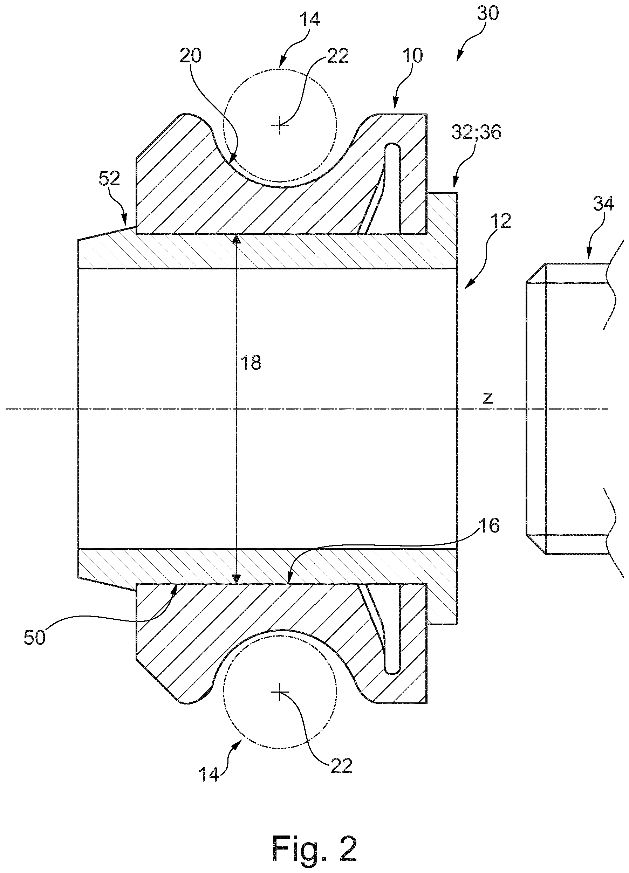

Fig. 2 shows a fixation system 30 in principle, which is designed for providing a connection interface 12 in a trusswork structure 14. The fixation system 30 comprises a fixation clip 10 based on the principles set out in Fig. 1, with or without modifications as described further down. The fixation system 30 comprises a fixation element 32. Fig. 2 shows the fixation system 30 in a cross-section being cut analogue to the cut along dimension y in the lower part of Fig. 1.

In the illustrated example, said fixation element 32 comprises a sleeve 36. However, it could also be bolt-like. The fixation element 32 is insertable to the central bore 16 of the fixation clip 10, thus increasing the diameter 18 of the central bore 16 under elastic deformation of the fixation clip 10 and widening the guiding path 22 formed by the guiding notch 20. Thus, the indicated trusswork structure 14 is secured in the guiding notch 20 and the guiding path 22, respectively. Generally, the fixation principle based on elastic deformation ensures safe fixation even in case of thermal material expansion or contraction, as often seen in aircrafts. Also any abrasive effects are properly compensated for this way.

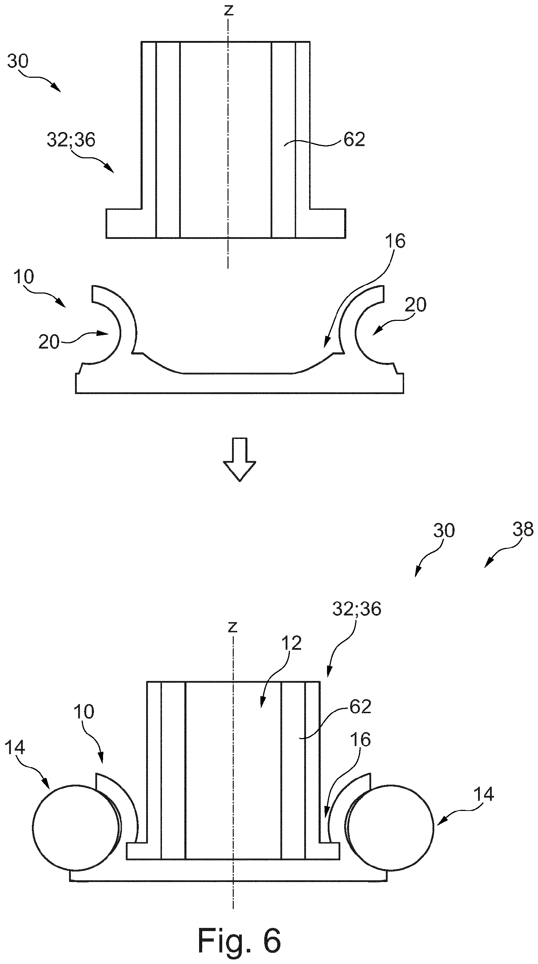

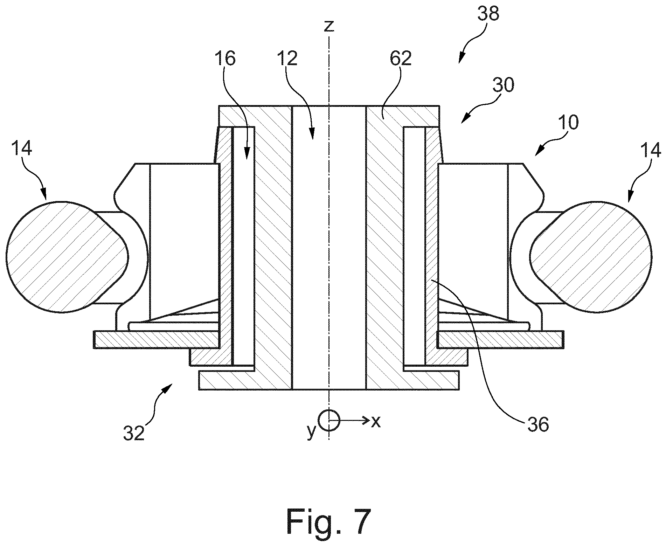

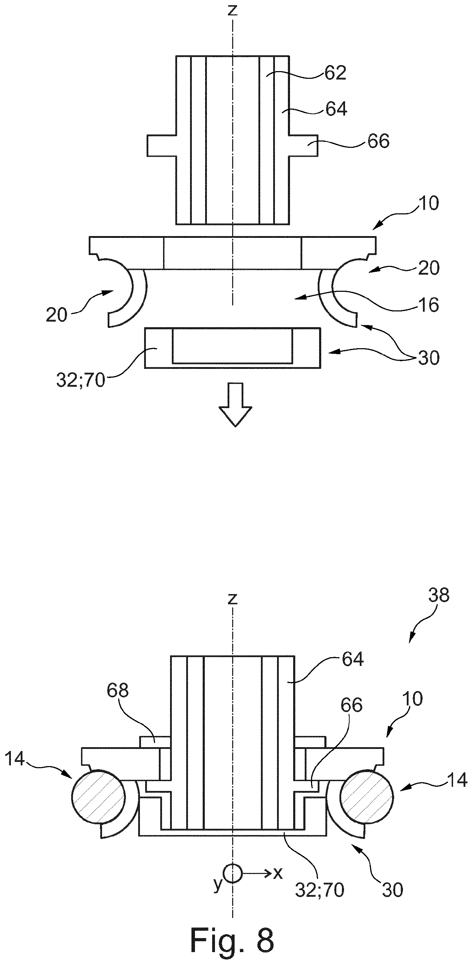

In this example, the fixation element 32 is designed to provide the connection interface 12 in combination with the central bore 16 of the fixation clip 10. For example, a bolt-like element 34, such as a screw, may be introduced to the connection interface 12 to affix an additional structure 42 (not shown, compare Fig. 3) to the trusswork structure 14. Generally, the fixation element 32 may be a single part or an assembly and may have a central bore itself, as shown in Fig. 2. For example, the fixation element 32 may comprise a screw, a threaded bolt with a counter-nut, a sleeve 36 (illustrated), a sleeve with an insert (compare Figs. 6, 7) or an additional cap (compare Fig. 8).

In the example illustrated in Fig. 2, the sleeve 36 may comprise an inclined surface 50 and the central bore 16 may be inclined in a corresponding manner. This increases an elastic deformation of the fixation clip 10 upon introduction of the fixation element 32. The sleeve 36 may further comprise a hook portion 52 to secure the sleeve 36 against displacement from the central bore 16. These principles may also be applicable to different types of fixation elements.

Fig. 3 shows a trusswork system 38 in principle. The trusswork system 38 may be part of an aircraft (not shown), for example a structure in a luggage accommodation space. The trusswork system 38 comprises a trusswork structure 14 with at least one lattice structure 40 (as generally comprised by a trusswork). The trusswork system 38 further comprises one or more fixation systems 30 based on the principles described above.

The guiding path 22 of the fixation clip 10 of the fixation system 30 is designed complementary to the lattice structure 40 so that the lattice structure 40 is arrangeable at least partially in the guiding path 22. The fixation element 32 of the fixation system 30 is insertable to the central bore 16 of the fixation clip 10. Thus, the diameter 18 of the central bore 16 can be increased under elastic deformation of the fixation clip 10, widening the guiding path 22 formed by the guiding notch 20 and affixing the fixation system 30 in the lattice structure 40. In the illustration of Fig. 3, the fixation clip 10 is not yet centered in the lattice structure 40 but will be pulled in place upon insertion of the fixation element 32.

Based on that, one or more additional structures 42 may be attached to the trusswork structure 14 via the at least one fixation system 30. Therefore, the central bore 16 of the fixation clip 10 in combination with the fixation element 32 provides the connection interface 12 in the trusswork structure 14. In Fig. 3, an additional structure 42 is indicated. It may feature a connection hole 54 through which the fixation element 32 may be introduced to the central bore 16 of the fixation clip 10 to fasten the fixation clip 10 in the trusswork structure 14 and the additional structure 42 against the trusswork structure 14. The additional structure 42 itself may comprise such a fixation element 32, as shown in Fig. 3. Also, a sleeve 36 could be introduced to the central bore 16 and form part of the connection interface 12.

A trusswork system 38 based on these principles allows various constructions to be designed based on the trusswork structure 14. Multiple connection interfaces 12 may be provided to improve a force allocation imposed to the trusswork structure 14 by the additional structure or structures 42.

To assemble the trusswork system 38, the lattice structure 40 of the trusswork structure 14 is at least partially arranged in the guiding path 22 of the fixation clip 10 of the fixation system 30 in a first step. In other words, the fixation clip can be arranged in the lattice structure 40. Then, the fixation element 32 is inserted to the central bore 16 of the fixation clip 10 of the fixation system 30, which is exemplarily indicated by movement 56 of the fixation element 32 formed by the additional structure 42 in Fig. 3. Thus, the diameter 18 of the central bore 16 is increased under elastic deformation of the fixation clip 10, widening the guiding path 22 formed by the guiding notch 20 and affixing (optionally pulling it into an assembly position) the fixation system 30 in the lattice structure 40. In this example, the additional structure 42 comprising the fixation element 32 is automatically attached at the same time.

In examples, wherein the fixation element 32 is not formed by the additional structure 42 itself, for example if the fixation element 32 is a separate bolt-like element 34 or sleeve 36, the additional structure 42 is then attached to the trusswork structure 14 in a further step, using the central bore 16 of the fixation clip 10 in combination with the fixation element 32 as the connection interface 12.

Fig. 4 shows an embodiment of a fixation clip 10 in a trusswork system 38, wherein the structure 26 of the fixation clip 10 forming the guiding notch 20 is slit 58, in this example cross-slitted, along the main axis z. This is an example of an interrupted structure 26. The cross-slitted structure 26 is thus forming four separate sections supporting the guiding path 22. The sections of the structure 26 are designed with respect to each other so that the guiding path 22 remains steady, in other words virtually connects the respective sections of the guiding notch 20.

Generally, elastic behavior of an object is always determined by a given combination of geometry (structural elasticity) and material properties (material elasticity). Based on that, the slit 58 structure 26 significantly increases the structural elasticity of the fixation clip 10. Thus, the elastic material can be chosen at a larger variety. For example, a harder material can be chosen to make the connection interface 12 provided by the central bore 16 more stable. This is particularly beneficial in case of a thread 28, for example, to receive a screw (not shown) as a fixation element 32. At the same time, the fixation clip 10 remains highly flexible and also suitable to be fixed into a sensitive trusswork structure 14, such as a carbon fiber structure.

Fig. 5 shows another embodiment of a fixation system 30 in a trusswork system 38. This embodiment is based on a fixation clip 10 as described in Fig. 4, however with the central bore 16 of the fixation clip 10 accommodating a sleeve 36 as the fixation element 32. The sleeve may be designed as shown in Fig. 2, for example. The lower part of Fig. 5 shows the trusswork system 38 from the upper part of Fig. 5 turned according to movement 60.

Fig. 6 shows another embodiment of a fixation system 30 in a trusswork system 38 in a cross-section. The cross-section is through the trusswork structure 14, the fixation clip 10 and the fixation element 32. The upper part of Fig. 6 shows the fixation system 30 in a not assembled state. In this embodiment, the fixation element 32 of the fixation system 30 comprises a sleeve 36. Inside the sleeve 36, an insert 62 is accommodated. The insert 62 may be a normed part, which means the sleeve 36 serves as a universal carrier, wherein different types of normed parts can be arranged. Thus, the fixation system 30 can be easily modified.

The sleeve 36 can be inserted into the central bore 16 of the fixation clip 10, as shown in the lower part of Fig. 6. Thus, the sleeve 36 spreads apart the guiding notch 20 and secures the fixation clip 10 against the trusswork structure 14. Via the insert 62, various types of connection interfaces 12 may be realized.

Fig. 7 shows another embodiment of a fixation system 30 similar to that of Fig. 2 in a trusswork system 38. The trusswork system 38 is shown in a cross-section in Fig. 7 through the trusswork structure 14, the fixation clip 10 and the fixation element 32. Again, the fixation element 32 comprises a sleeve 36 with an insert 62. In this example, the insert 62 is floating in the central bore 16 of the sleeve 36 in dimensions x and y.

If an additional structure 42 (not shown) is connected to the trusswork structure 14 via connection interface 12, this allows limited displacement in the dimensions x and y and facilitates assembly as it provides certain tolerances. Further, thermal expansion or contraction may be compensated for in the trusswork structure 14.

Fig. 8 shows another embodiment of a fixation system 30 in a trusswork system 38. The trusswork system 38 is shown in a cross-section in Fig. 8 through the trusswork structure 14, and the fixation system 30. As can be seen in the upper part of Fig. 8, the fixation element 32 comprises a cap 70. The cap 70 is insertable to the central bore 16 of the fixation clip 10 to secure the trusswork structure 14 in the guiding notch 20, as shown in the lower part of Fig. 8.

The fixation system 30 further comprises an additional sleeve 64 that may be introduced to the central bore 16 of the fixation clip 10 in a floating manner and may be floatingly accommodated by the cap 70. The additional sleeve 64 comprises a collar 66 that may contact the fixation clip 10 inside the central bore 16, if the additional sleeve 64 is introduced to the central bore 16. Thus, the collar 66 limits movement of the additional sleeve 64 along the main axis z in the direction of the fixation clip 10. The additional sleeve 64 may be further secured by a securing ring 68 to limit movement entirely along the main axis z, while the additional sleeve 64 is still allowed to float in dimensions x and y. The additional sleeve 64 may also comprise an insert 62.

### Reference numerals

- 10: fixation clip
- 12: connection interface
- 14: trusswork structure
- 16: central bore
- 18: diameter
- 20: guiding notch
- 22: guiding path
- 24: area
- 26: structure
- 28: thread
- 30: fixation system
- 32: fixation element
- 34: bolt-like element
- 36: sleeve
- 38: trusswork system
- 40: lattice structure
- 42: additional structure
- 44: viewing direction
- 46: insertion
- 48: chamfer
- 50: inclined surface
- 52: hook portion
- 54: connection hole
- 56: movement
- 58: slit
- 60: movement
- 62: insert
- 64: additional sleeve
- 66: collar
- 68: securing ring
- 70: cap
- x: dimension
- y: dimension
- z: main axis

## Claims

1. Fixation clip (10) for providing a connection interface (12) in a trusswork structure (14), said fixation clip (10) comprising:
- an elastic material, from which the fixation clip (10) is at least sectionally made;
- a central bore (16) with a main axis (z) and a diameter (18) being constant or variable along the main axis (z); and
- at least one guiding notch (20),
wherein the guiding notch (20) is, at least in sections, selectably displaceable towards the central bore (16) or away from the central bore (16), under elastic deformation of the fixation clip (10); and
wherein the guiding notch (20) is forming a guiding path (22) around the main axis (z) that is constricted towards the main axis (z) or widened from the main axis (z), depending on said displacement of the guiding notch (20); and
wherein the diameter (18) of the central bore (16), at least sectionally, is decreased if the guiding path (22) is constricted and increased, if the guiding path (22) is widened.

2. Fixation clip (10) according to claim 1, wherein the guiding path (22) features a polygonal shape.

3. Fixation clip (10) according to any of the preceding claims, wherein the elastic material, the guiding notch (20) and the central bore (16) are adapted to each other so that elastic deformation of the fixation clip (10) allows, compared to a tension-free state of the fixation clip (10), an increase or decrease of the diameter (18) of the central bore (16) by 5 to 25 %, while the guiding path (22) is constricted or widened by 5 to 25 % referring to the size of an area (24) enclosed by the guiding path (22).

4. Fixation clip (10) according to any of the preceding claims, wherein the central bore (16) comprises a connection interface (12) equipped with a thread (28) or bayonet lock.

5. Fixation clip (10) according to any of the preceding claims, wherein a structure (26) of the fixation clip (10) forming the guiding notch (20) is slit along the main axis (z).

6. Fixation system (30) for providing a connection interface (12) in a trusswork structure (14), comprising:
- a fixation clip (10) according to any of the preceding claims; and
- a fixation element (32);
wherein the fixation element (32) is insertable to the central bore (16) of the fixation clip (10), thus increasing the diameter (18) of the central bore (16) under elastic deformation of the fixation clip (10) and widening the guiding path (22) formed by the guiding notch (20); and
wherein the fixation element (32) is designed to provide the connection interface (12) in combination with the central bore (16) of the fixation clip (10).

7. Fixation system (30) according to claim 6, wherein said fixation element (32) comprises a bolt-like element (34).

8. Fixation system (30) according to claim 6, wherein said fixation element (32) comprises a sleeve (36).

9. Trusswork system (38), comprising:
- a trusswork structure (14) comprising at least one lattice structure (40); and
- at least one fixation system (30) according to any of the claims 6 to 8;
wherein the guiding path (22) of the fixation clip (10) of the fixation system (30) is designed complementary to the lattice structure (40);
wherein the lattice structure (40) is arrangeable at least partially in the guiding path (22); and
wherein the fixation element (32) of the fixation system (30) is insertable to the central bore (16) of the fixation clip (10), thus increasing the diameter (18) of the central bore (16) under elastic deformation of the fixation clip (10), widening the guiding path (22) formed by the guiding notch (20) and affixing the fixation system (30) in the lattice structure (40).

10. Trusswork system (38), according to claim 9, wherein at least one additional structure (42) is attached to the trusswork structure (14) via the at least one fixation system (30), wherein the central bore (16) of the fixation clip (10) in combination with the fixation element (32) provide the connection interface (12) in the trusswork structure (14).

11. Method of assembling a trusswork system (38) according to claim 10, comprising the following steps:
- Arranging the lattice structure (40) of the trusswork structure (14) at least partially in the guiding path (22) of the fixation clip (10) of the fixation system (30);
- Inserting the fixation element (32) to the central bore (16) of the fixation clip (10) of the fixation system (30), thus increasing the diameter (18) of the central bore (16) under elastic deformation of the fixation clip (10), widening the guiding path (22) formed by the guiding notch (20) and affixing the fixation system (30) in the lattice structure (40);
- Attaching at least one additional structure (42) to the trusswork structure (14) using the central bore (16) of the fixation clip (10) in combination with the fixation element (32) as the connection interface (12).

12. Aircraft, comprising a trusswork system (38) according to claim 9 or 10.
